# EUROPÄISCHE PATENTSCHRIFT

(11) **EP 2 150 434 B1**
(45) Veröffentlichungstag und Bekanntmachung des Hinweises auf die Patenterteilung: **17.10.2018**
(21) Anmeldenummer: 08758052.8
(22) Anmeldetag: 13.05.2008
(51) Int. Cl.: B60L 7/28

(54) **FAHRZEUG MIT EINER WIRBELSTROMBREMSE FÜR EIN SPURGEBUNDENES VERKEHRSSYSTEM UND DAMIT BETRIEBENES VERKEHRSSYSTEM, INSBESONDERE MAGNETSCHWEBEBAHN**
VEHICLE COMPRISING AN EDDY CURRENT BRAKE FOR A TRACKED TRAFFIC SYSTEM, AND TRAFFIC SYSTEM, ESPECIALLY MAGLEV RAILWAY, OPERATED THEREWITH
VÉHICULE ÉQUIPÉ D'UN FREIN À COURANTS DE FOUCAULT POUR UN SYSTÈME DE TRANSPORT GUIDÉ ET SYSTÈME DE TRANSPORT, EN PARTICULIER TRAIN À SUSTENTATION MAGNÉTIQUE, FONCTIONNANT AVEC LEDIT VÉHICULE

(30) Priorität: 01.06.2007 DE 102007025793
(43) Veröffentlichungstag der Anmeldung: 10.02.2010
(73) Patentinhaber: ThyssenKrupp Transrapid GmbH, 34127 Kassel (DE)
(72) Erfinder: LÖSER, Friedrich, 85521 Riemerling (DE); ZHENG, Qinghua, 80331 München (DE)
(74) Vertreter: Lorenz, Bernd Ingo Thaddeus
(86) Internationale Anmeldenummer: PCT/DE2008/000796
(87) Internationale Veröffentlichungsnummer: WO 2008/145086

(56) Entgegenhaltungen:
- DE-A1- 2 931 539
- DE-A1- 10 008 052
- DE-A1-102004 013 994
- US-A- 4 122 922
- UWE KRÖGER: "PRINZIP, ENTWICKLUNG UND KONSTRUKTION DER LINEAREN WIRBELSTROMBREMSEN" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 109, Nr. 9, 9. September 1985 (1985-09-09), Seiten 368-374, XP000572396 ISSN: 0941-0589

## Beschreibung

Die Erfindung betrifft ein Fahrzeug der im Oberbegriff des Anspruchs 1 angegebenen Gattung und ein mit einem solchen Fahrzeug betriebenes, spurgebundenes Verkehrssystem, insbesondere in Form einer Magnetschwebebahn.

Fahrzeuge dieser Art werden insbesondere im Fall einer Magnetschwebebahn z. B. durch Langstator-Linearmotoren angetrieben und weisen zum Antrieb der Fahrzeuge bestimmte Dreiphasen-Wechselstrom-Wicklungen auf, die längs des Fahrwegs in einem Langstator verlegt sind. Das Erregerfeld der Linearmotoren wird von gleichzeitig als Erregermagneten wirkenden, im Fahrzeug angeordneten Tragmagneten geliefert, die eine erste Magnetanordnung bilden (z. B. DE 39 17 058 C2). Die Linearmotoren können außer für den Antrieb auch zum Bremsen der Fahrzeuge verwendet werden.

Daneben weisen die Fahrzeuge der eingangs bezeichneten Gattung vorzugsweise auf beiden Seiten je eine zweite Magnetanordnung auf, die der Funktion "Führen" dient und eine Mehrzahl von in Fahrtrichtung hintereinander angeordneten Magnetpolen und diesen zugeordneten Wicklungen aufweist (z. B. DE 10 2004 056 438 A1). Diese werden derart mit Strom betrieben, dass alle jeweils in einer zur Fahrtrichtung parallelen Reihe bzw. Ebene liegenden Magnetpole dieselbe Polarität bzw. Orientierung aufweisen. Außerdem werden diese Magnetanordnungen mit Hilfe von Regelkreisen und zugeordneten Spaltsensoren so gesteuert, dass als Führspalte bezeichnete Spalte zwischen den Magnetpolen und beidseitig am Fahrweg angebrachten, ferromagnetischen Seitenführschienen stets auf gleich großen Werten gehalten werden.

Da z. B. beim Ausfall einzelner oder aller Trag- und Erregermagnete oder des Antriebssystems keine Bremsmöglichkeit mehr besteht, sind für hohe Geschwindigkeiten bestimmte Magnetschwebefahrzeuge zusätzlich mit einer sog. "sicheren" Bremse ausgerüstet, die vorzugsweise aus einer Wirbelstrombremse besteht (DE 10 2004 013 994 A1). Eine derartige Wirbelstrombremse wird aus einer dritten Magnetanordnung gebildet, die zwischen den Magnetanordnungen für die Funktion "Führen" angeordnet wird. Diese dritte Magnetanordnung wirkt mit einer elektrisch leitenden Reaktionsschiene, vorzugsweise mit der Seitenführschiene zusammen und weist eine Mehrzahl von in Fahrtrichtung hintereinander angeordneten Magnetpolen auf, die im Gegensatz zu denen der Führmagnetanordnung mit unterschiedlichen Polaritäten, vorzugsweise abwechselnd mit Nord- und Südpolen betrieben wird. Dadurch werden im Bremsfall Wirbelströme in der Reaktionsschiene erzeugt, die in Abhängigkeit von der Geschwindigkeit des Magnetschwebefahrzeugs und der Größe des Gleichstroms, der durch die Wicklungen der Bremsmagnetanordnung geleitet wird, das Magnetschwebefahrzeug mehr oder weniger stark abbremsen. Aufgrund der beschriebenen Konstruktion üblicher Wirbelstrombremsen müssen deren Elektromagnetpole in einem Bremsfall durch das Einschalten vergleichsweise hoher elektrischer Ströme (z.B. 80 A Gleichstrom) aktiviert werden. Das hat zur Folge, daß in den Magnetschwebefahrzeugen elektrische Energiespeicher mit erheblichen Speicherkapazitäten in Form von Batterien vorgesehen werden müssen, die nur in einem Notfall benötigt werden. Das ist unwirtschaftlich, mit einer erheblichen Steigerung des Gesamtgewichts und des Raumbedarfs verbunden und wegen der erforderlichen ständigen Wartung unerwünscht.

Entsprechende Wirbelstrombremsen können auch bei anderen spurgebundenen Verkehrssystemen vorgesehen werden. Im Falle eines Rad/Schiene-Systems könnten die Fahrzeuge beispielsweise mit Wirbelstrombremsen ausgerüstet sein, die mit den üblichen Schienen zusammenwirken, die somit hier gleichzeitig als Fahr- und Reaktionsschienen dienen. Eine permanentmagnetisch erregte Wirbelstrombremse mit drehbaren Magneten ist in DE10008052 offenbart.

Ausgehend davon liegt der Erfindung das technische Problem zugrunde, das Fahrzeug der eingangs bezeichneten Gattung und das damit betriebene Verkehrssystem so auszubilden, daß zur Aktivierung der Wirbelstrombremse nur ein Minimum an elektrischer Energie benötigt wird.

Gelöst wird dieses Problem erfindungsgemäß mit den kennzeichnenden Merkmalen des Anspruchs 1.

Wegen der erfindungsgemäßen Anwendung von Permanentmagneten ist es zur Aktivierung der Wirbelstrombremse in einem Bremsfall lediglich erforderlich, die Permanentmagnete aus einer inaktiven Stellung in eine aktive Stellung zu bewegen. Die hierzu erforderliche Engergie ist gering und kann z.B. dadurch noch weiter reduziert werden, daß die Bewegung der Permanentmagnete mit Hilfe vorgespannter Federn erfolgt, die beim normalen Betrieb mittels eines Verriegelungsmechanismus gespannt gehalten und in einem Bremsfall durch einen Endriegelungsvorgang freigegeben werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen schematischen Teilquerschnitt durch ein übliches Magnetschwebefahrzeug;
Fig. 2 eine schematische Seitenansicht eines Teils des mit einer bekannten Führ- und Bremsanordnung ausgebildeten Magnetschwebefahrzeugs nach Fig. 1;
Fig. 3 schematisch die Anordnung einer erfindungsgemäßen Wirbelstrombremse an einem Magnetschwebefahrzeug nach Fig. 1 und 2;
Fig. 4 und 5 schematisch die Lage von Permanentmagneten der erfindungsgemäßen Wirbelstrombremse in je einer inaktiven und aktiven Stellung;
Fig. 6 bis 9 Schnitte längs der Linien VI-VI bis IX-IX der Fig. 4 und 5;
Fig. 10 einen Schnitt durch mehrere, je zwei Permanentmagnete enthaltende Magnetpoleinheiten der erfindungsgemäßen Wirbelstrombremse in drei unterschiedlichen Drehstellungen;
Fig. 11 und 12 Schnitte längs der Linien XI-XI und XII-XII der Fig. 10;
Fig. 13 bis 20 in schematischen Darstellungen die Aktivierung einer erfindungsgemäßen Wirbelstrombremse; und
Fig. 21 bis Fig. 24 schematisch ein Mittel zur Verriegelung einer einzelnen Magnetpoleinheit nach Fig. 10 bis 12 in einer inaktiven Stellung und deren Aktivierung bzw. Überführung in eine aktive Stellung, jeweils in einem Schnitt entsprechend Fig. 11 und 12 und einer Hinteransicht.

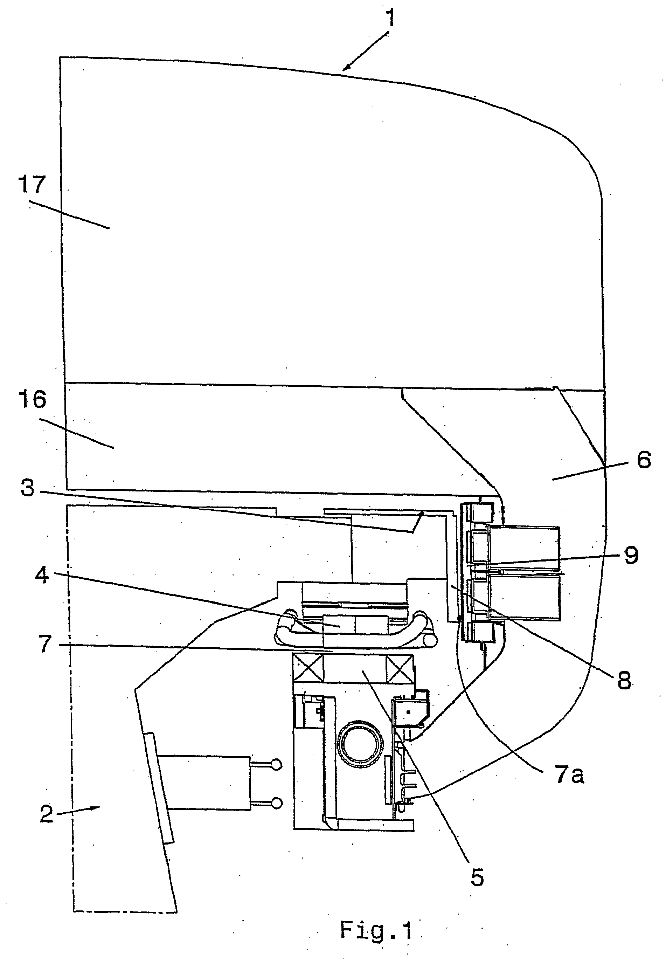

Fig. 1 zeigt schematisch einen Querschnitt durch ein Magnetschwebefahrzeug 1, das in üblicher Weise auf einem Fahrweg fahrbar montiert ist, der aus Stahl und/oder Beton hergestellte Träger 2 und auf diesen montierte Fahrwergplatten 3 enthält. Der Antrieb des Magnetschwebefahrzeugs 1 erfolgt mittels eines Langstatormotors, der unterhalb der Fahrwegplatten 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstatormotors wird durch wenigstens einen Tragmagneten 5 erzeugt, der mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Schwebens, indem er beim Betrieb des Magnetschwebefahrzeugs 1 einen vorgegebenen Spalt 7 von z. B. 10 mm zwischen dem Tragmagneten 5 und den Statorpaketen 4 aufrecht erhält.

Zur Spurführung des Magnetschwebefahrzeugs 1 weisen die Fahrwegplatten 3 seitlich angebrachte Reaktions- bzw. Seitenführschienen 8 auf, denen ebenfalls an den Gestellbügeln 6 montierte Führmagnete 9 gegenüberstehen, die beim Betrieb dazu dienen, zwischen sich und der Reaktionsschiene 8 einen dem Spalt 7 entsprechenden Spalt 7a aufrecht zu erhalten. Dabei bilden der in Fig. 1 gezeigte Tragmagnet 5 und der Führmagnet 9 jeweils eine an den Gestellbügeln 6 befestigte Magnetanordnung für die Funktionen "Tragen" bzw. "Führen". Es ist jedoch klar, dass am Magnetschwebefahrzeug 1 seitlichen nebeneinander und in Fahrtrichtung hintereinander in der Regel eine Mehrzahl derartiger Magnetanordnungen angebracht sein kann. Jede Magnetanordnung ist vorzugsweise mit einem Magnetrückenkasten verbunden, mit dem sie an den Gestellbügeln 6 befestigt ist, die ihrerseits mit einem biegesteifen, Längs- und Querverbinder aufweisenden Unter- bzw. Schwebegestell 16 verbunden sind, auf dem ein mit einer Fahrgastzelle versehener Wagenkasten 17 des Magnetschwebefahrzeugs 1 (Fig. 1) abgestützt ist.

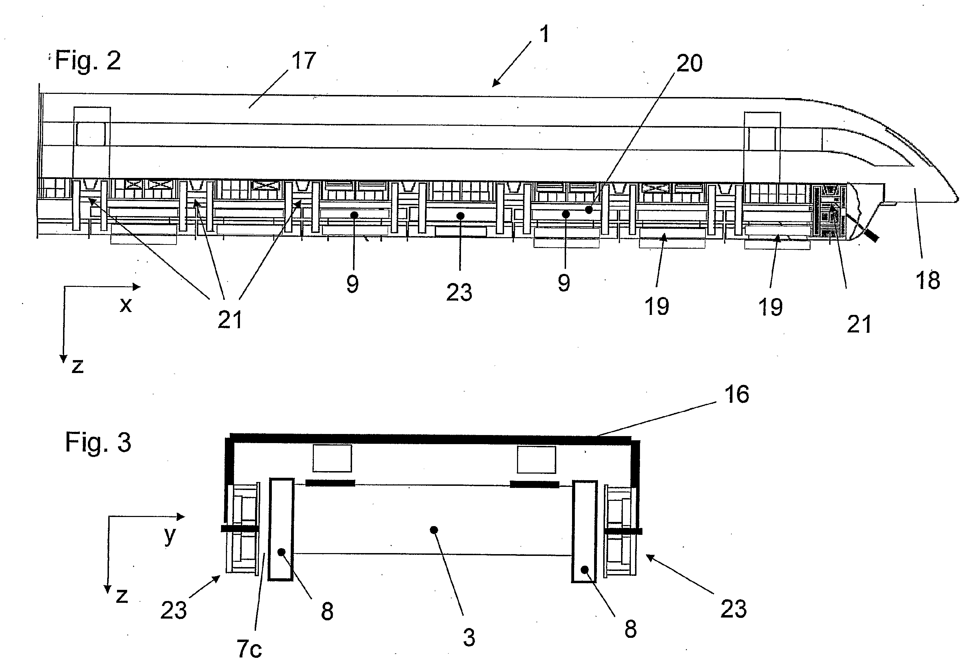

Für ein praktisches Ausführungsbeispiel des Magnetschwebefahrzeugs 1 nach Fig. 1 ergibt sich etwa die in Fig. 2 dargestellte Anordnung. Die Fahrtrichtung des Magnetschwebefahrzeugs 1 wird durch die Koordinate x eines gedachten Koordinatensystems und sein Vorderende durch das Bezugszeichen 18 angegeben. Weiter sind grob schematisch einige Schwebegestellabschnitte 19 des Schwebegestells 16 (Fig. 1) gezeigt, die in Längsrichtung des Fahrzeugs 1 hintereinander angeordnet und über nicht dargestellte Luftfedern an den Wagenkasten 17 des Magnetschwebefahrzeugs 1 angekoppelt sind. Die Schwebegestellabschnitte 19 weisen in Längsrichtung beabstandete, durch Längsträger 20 verbundene Abstützelemente 21 in Form von Rahmenteilen auf, an denen in bekannter Weise die Führmagnete 9 und zusätzlich die Magnetanordnungen von Wirbelstrombremsen 23 befestigt sind. Im Ausführungsbeispiel ist eine Wirbelstrombremse 23 zwischen je drei vorderen und hinteren Führmagneten 9 angeordnet.

Magnetschwebefahrzeuge sowie Führ- und Bremsmagnetanordnungen der beschriebenen Art sind dem Fachmann aus den Druckschriften DE 10 2004 056 438 A1 und DE 10 2004 013 994 A1 bekannt, die hiermit der Einfachheit halber durch Referenz auf sie zum Gegenstand der vorliegenden Offenbarung gemacht werden.

Fig. 3 zeigt schematisch die Anordnung von zwei Wirbelstrombremsen 23, die an je einer der beiden Seiten des Schwebegestells 16 angeordnet sind und den Reaktionsschienen 8 unter Bildung je eines Spalts 7c gegenüberstehen. Beim normalen Betrieb befinden sich die Wirbelstrombremsen 23 in einer inaktiven Stellung bezüglich der Reaktionsschienen 8 oder außerhalb von deren Wirkungsbereich. Ist eine Notbremsung erforderlich oder eine Anwendung der Wirbelstrombremsen 23 aus anderen Gründen erwünscht, dann werden die Wirbelstrombremsen 23 erfindungsgemäß derart in eine aktive Stellung bezüglich der Reaktionsschienen 8 bzw. in deren Wirkungsbereich bewegt, daß in Fahrtrichtung x des Magnetschwebefahrzeugs 1 in einer vorgewählten Anzahl und Reihenfolge abwechselnd Magnetpole der einen oder anderen Polarität (Nord- oder Südpole) den Reaktionsschienen 8 gegenüberstehen. Dadurch werden in den massiven, aus ferromagnetischem Material bestehenden Reaktionsschienen 8 Wirbelströme erzeugt, die das Magnetschwebefahrzeug 1 abbremsen.

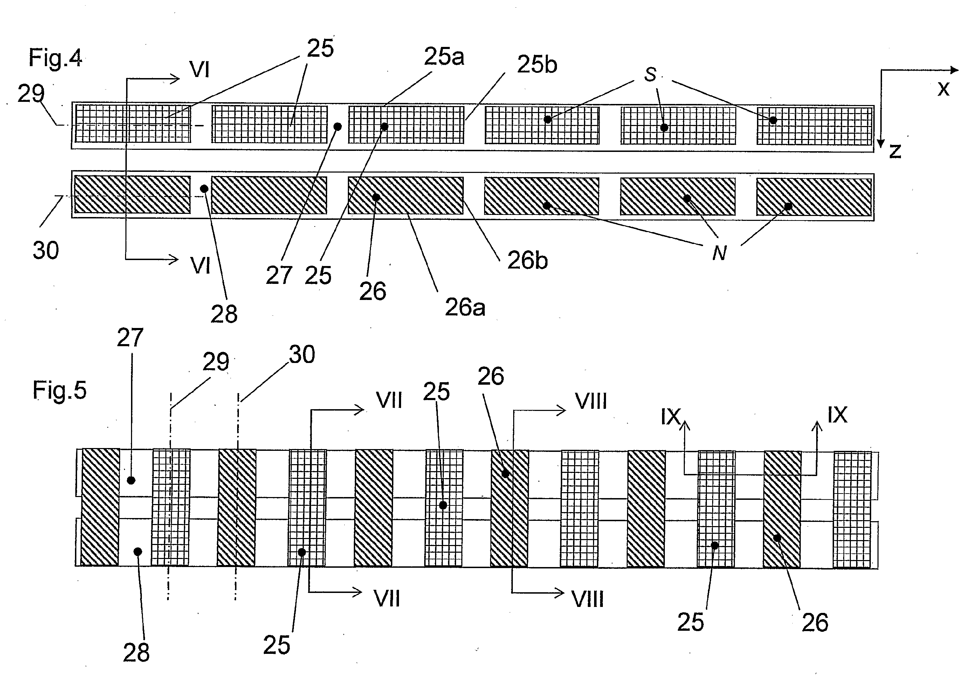

Fig. 4 bis 9 zeigen zunächst schematisch ein Ausführungsbeispiel einer erfindungsgemäßen Wirbelstrombremse 23. Diese enthält in zwei in z-Richtung übereinander angeordneten Reihen z.B. je sechs, in x-Richtung hintereinander angeordnete Permanentmagnete 25 und 26 und diesen zugeordnete, zur Schließung von magnetischen Kreisen bestimmte, z.B. als Weicheisenschienen ausgebildete Polschuhe bzw. Magnetrücken 27 und 28. Die Magnetrücken 27, 28 erstrecken sich vorzugsweise über die ganze, in x-Richtung gemessene Länge einer Wirbelstrombremse 23.

Die Permanentmagnete 25, 26 sind, wie insbesondere Fig. 4 und 5 sowie 7 und 8 zeigen, vorzugsweise quaderförmig ausgebildet und haben im Längsschnitt vorzugsweise eine rechteckige Form mit langen Seiten 25a, 26a und kurzen Stirnseiten 25b und 26b. Die Permanentmagnete 25, 26 sind außerdem so ausgebildet, daß sie an einer langen Seite z.B. eine als magnetischer Nordpol (N) ausgebildete Polfläche und auf der gegenüber liegenden Seite einen als magnetischer Südpol (S) ausgebildete Polfläche aufweisen und mit einer dieser Polflächen den Magnetrücken 27, 28 dicht und parallel gegenüber stehen oder diese berühren. Außerdem zeigt Fig. 4 eine inaktive Stellung, in der alle Permanentmagnete 25, 26 mit ihren langen Seiten 25a, 26a bzw. mit ihren Längsachsen 29 und 30 jeweils parallel zur x-Richtung angeordnet und den Magnetrücken 27, 28 so zugeordnet sind, daß dem einen Magnetrücken (hier 27) nur magnetische Nordpole und dem anderen Magnetrücken (hier 28) nur magnetische Südpole gegenüberstehen. Natürlich könnte die Anordnung auch umgekehrt gewählt werden. Wichtig ist nur, daß in Fig. 4 an jedem Magnetrücken 27, 28 in x- bzw. Fahrtrichtung nur Pole mit gleicher Orientierung bzw. Polarität hintereinander angeordnet sind.

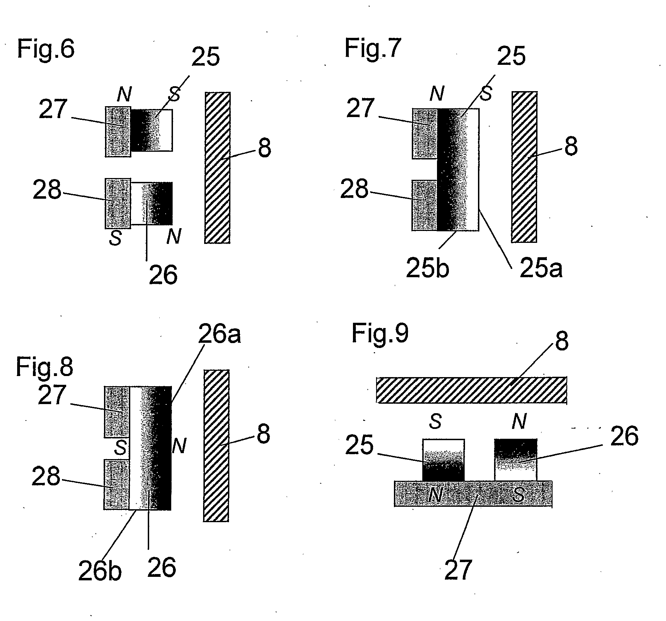

Während in Fig. 4 und 5 nur die Permanentmagnete 25, 26 der Wirbelstrombremse 23 dargestellt sind, ist in Fig. 6 bis 9 schematisch auch die jeweils zugehörige Reaktionsschiene 8 angedeutet. Danach sind in Fig. 6, die der inaktiven Stellung entspricht, der Reaktionsschiene 8 in einem dem Magnetrücken 27 gegenüberliegenden Bereich nur als Südpole S ausgebildete Polflächen der Permanentmagnete 25 und in einem dem Magnetrücken 28 gegenüberliegenden Bereich nur als Nordpole N der Permanentmagnete 26 ausgebildete Polflächen zugeordnet. Als Folge davon herrschen zwischen den Permanentmagneten 25, 26 und den Reaktionsschienen 8, wenn das Magnetschwebefahrzeug 1 längs des Fahrwegs 2 in x-Richtung fährt, im wesentlichen nur Anziehungskräfte. Sind die Permanentmagnete 25 einerseits und 26 andererseits in Fahrtrichtung x bis auf kleine Lücken, die aus weiter unten erläuterten Gründen zweckmäßig sind, dicht hintereinander angeordnet, dann wird aufgrund der gleichen Orientierung außerdem erreicht, daß in den Reaktionsschienen 8 allenfalls kleine, den Fahrtwiderstand nur wenig erhöhende Wirbelströme erzeugt werden.

Abgesehen davon sind die Polflächen der Permanentmagnete 25, 26 und die ihnen gegenüber liegenden Flächen der Reaktionsschienen 8 vorzugsweise eben ausgebildet und parallel zueinander angeordnet.

Ist es erwünscht, die Wirbelstrombremse 23 zu aktivieren, dann wird dies erfindungsgemäß dadurch erreicht, daß die Permanentmagnete 25, 26 gemäß Fig. 5 mit ihren Längsachsen 29, 30 quer, insbesondere senkrecht zur Fahrtrichtung x angeordnet werden. Wird die Anordnung entsprechend Fig. 5 außerdem so getroffen, daß in Fahrtrichtung x jetzt abwechselnd Nord- und Südpole aufeinander folgen und außerdem die Permanentmagnete 25, 26 jeweils etwa zur Hälfte dem einem und dem anderen Magnetrücken 27, 28 gegenüberstehen oder an diesem anliegen, dann hat dies, wie insbesondere Fig. 7 bis 9 zeigen, gleichzeitig auch zur Folge, daß der Reaktionsschiene 8 in derselben Ebene abwechselnd Nord- und Südpole gegenüberstehen, und zwar sowohl in der dem Magnetrücken 27 als auch in der dem Magnetrücken 28 gegenüberstehenden Ebene. Aufgrund der alternierenden Anordnung von Nord- und Südpolen und der in x-Richtung erfolgenden Bewegung der Permanentmagnete 25, 26 relativ zu den aus massiven und elektrisch leitenden Materialien hergestellten Reaktionsschienen 8 entstehen magnetische Wechselfelder, die in den Reaktionsschienen 8 entsprechende elektrische Wechselfelder und damit Wirbelströme induzieren, die den Grund ihrer Entstehung, nämlich die Bewegung der Magnetpole 25 und 26, zu hemmen versuchen und das Magnetschwebefahrzeug 1 dadurch bremsen. Die Größe der Bremskraft ist durch die Magnetfeldstärken der Magnetpole wählbar.

Erfindungsgemäß weist die Wirbelstrombremse 23 somit einerseits durch beweglich gelagerte Permanentmagnete 25, 26 gebildete Magnetpole und andererseits Aktivierungsmittel auf, die zur Bewegung der Permanenmagnete 25, 26 aus der in Fig. 4 gezeigten inaktiven Stellung in die in Fig. 5 gezeigte aktive Stellung eingerichtet sind. Im Ausführungsbeispiel sind außerdem wenigstens zwei, unterschiedliche Orientierungen aufweisende Permanentmagnete 25, 26 vorhanden, deren Polflächen im wesentlichen in einer gemeinsamen, zur Reaktionsschiene 8 parallelen Ebene liegen, wobei Magnetpole unterschiedlicher Polaritäten in der inaktiven Stellung nur übereinander, in der aktiven Stellung dagegen in Fahrtrichtung abwechselnd hintereinander (Fig. 5) liegen.

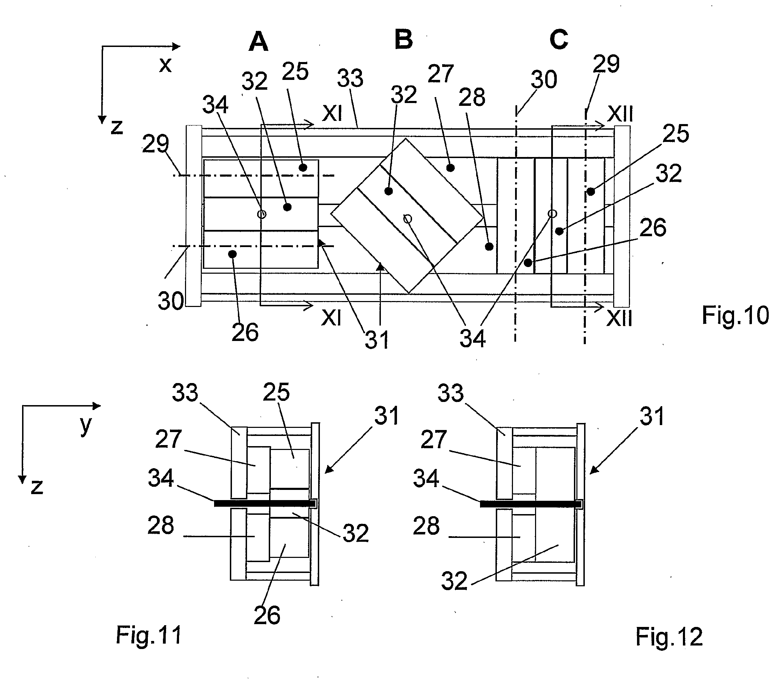

Nach einem bevorzugten und bisher für am besten gehaltenen Ausführungsbeispiel erfolgt die Aktivierung der Wirbelstrombremse 23 dadurch, daß die Permanentmagnete 25, 26 gedreht werden und das Aktivierungsmittel zur Drehung der Permanentmagnete 25, 26 eingerichtet ist. Dies wird nachfolgend anhand der Fig. 10 bis 12 näher erläutert.

Fig. 10 zeigt schematisch einen je drei der sechs Permanentmagnete 25, 26 aufweisenden Teil der Wirbelstrombremse 23 nach Fig. 4 und 5. Je ein Permanentmagnet 25 ist mit je einem Permanentmagnet 26 zu einer Magnetpoleinheit 31 zusammengefaßt. Zu diesem Zweck sind die Permanentmagnete 25, 26 paarweise mit ihren langen Seiten parallel zueinander angeordnet und an einem zwischen ihnen liegenden Verbindungsteil 32 befestigt. Die drei in Fig. 10 gezeigten Magnetpoleinheiten 31 bzw. die anderen drei, entsprechend ausgebildeten Magnetpoleinheiten 31 der Wirbelstrombremse 23 sind in x-Richtung hintereinander in einem Gehäuse 33 angeordnet, an dessen Rückseite die beiden Magnetrücken 27, 28 befestigt sind, wie Fig. 11 und 12 zeigen. Das Gehäuse 33 und mit ihm die Magnetrücken 27, 28 sind im Ausführungsbeispiel stationär am nicht dargestellten Magnetschwebefahrzeug befestigt und über die ganze Länge der Wirbelstrombremse 23 erstreckt, während die Verbindungsteile 32 der Magnetpoleinheiten 31 an drehbar im Gehäuse 33 gelagerten Achsen 34 starr befestigt und zusammen mit diesen drehbar im Gehäuse 33 gelagert sind. Die Drehachsen der Achsen 34 sind parallel zur y-Achse des gedachten Koordinatensystems angeordnet, während die den Magnetrücken 27, 28 einerseits und den Reaktionsschienen 8 andererseits zugewandten Magnetpolflächen der Permanentmagnete 25, 26 gemäß Fig. 11 und 12 vorzugsweise parallel zu xy-Ebenen dieses Koordinatensystems liegen, was auch für die zugeordneten Flächen der Magnetrücken 27, 28 und die in Fig. 10 bis 12 nicht dargestellten Reaktionsschienen 8 gilt.

In einer inaktiven Stellung A (Fig. 10) liegt der Permanentmagnet 25 einer der Magnetpoleinheiten 31 mit seiner Längsachse 29 parallel zum Magnetrücken 27 und der Permanentmagnet 26 mit seiner Längsachse 30 parallel zum Magnetrücken 28, wie auch aus Fig. 4 ersichtlich ist. Wird die Magnetpoleinheit 31 um ihre Achse 34 um ca. 45° gedreht, dann ergibt sich die Stellung B in Fig. 10, wonach beide Permanentmagnete 25, 26 teils dem Magnetrücken 27 und teils dem Magnetrücken 28 gegenüberstehen. Nach einer Drehung gegenüber der Stellung A um 90° nimmt eine Magnetpoleinheit 31 schließlich eine Stellung C ein, in welcher sowohl der Permanentmagnet 25 als auch der Permanentmagnet 26 je etwa zur Hälfte dem Magnetrücken 27 und dem Magnetrücken 28 gegenübersteht. Die Längsachsen 29, 30 der Permanentmagnete 25, 26 sind jetzt analog zu Fig. 5 im wesentlichen parallel zur z-Achse angeordnet mit der Folge, daß auf der Seite der Reaktionsschiene 8 auf einen Magnetpol der einen Orientierung (z.B. S-Pol des Permanentmagneten 25) in x-Richtung ein Magnetpol der anderen Orientierung (z.B. N-Pol des Permanentmagneten 26) folgt. Durch bloßes Drehen der Magnetpoleinheiten 31 ist es daher möglich, die Wirbelstrombremse 23 aus ihrem inaktiven Zustand (Fig. 4 und 11) in ihren aktiven Zustand (Fig. 5 und 12) zu bewegen.

Die beschriebene Drehung der Permanentmagnete 25, 26 hat zahlreiche Vorteile. Zunächst kann sie mit vergleichsweise geringem Aufwand an elektrische Energie durchgeführt werden. Außerdem kann die Bremskraft dadurch weitgehend flexibel eingestellt werden, daß die Zahl der in die aktive Stellung gedrehten Magnetpoleinheiten 31 je nach Bedarf unterschiedlich groß gewählt wird. Beim Vorhandensein von sechs Magnetpoleinheiten 31 sind insbesondere sechs unterschiedliche Bremsstufen möglich.

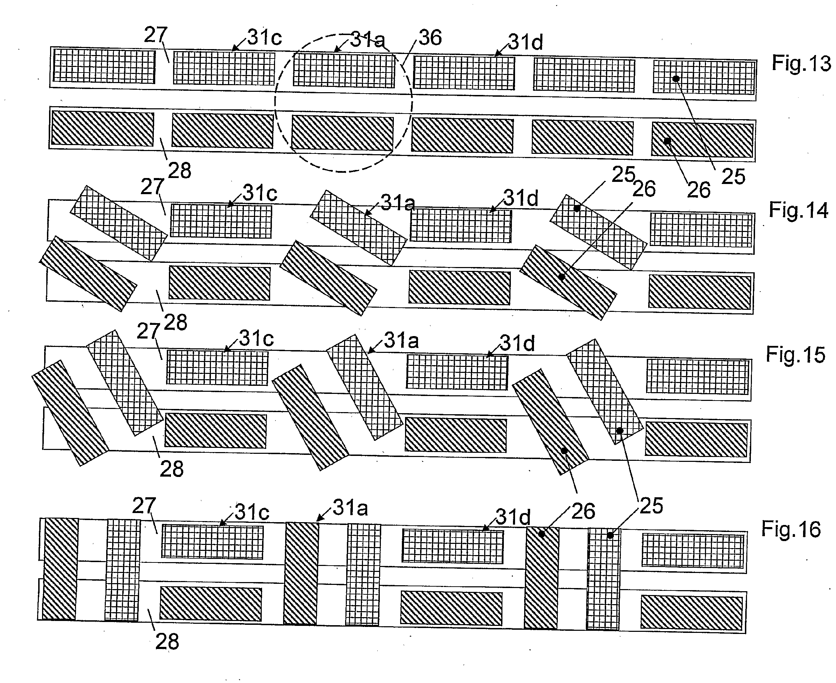

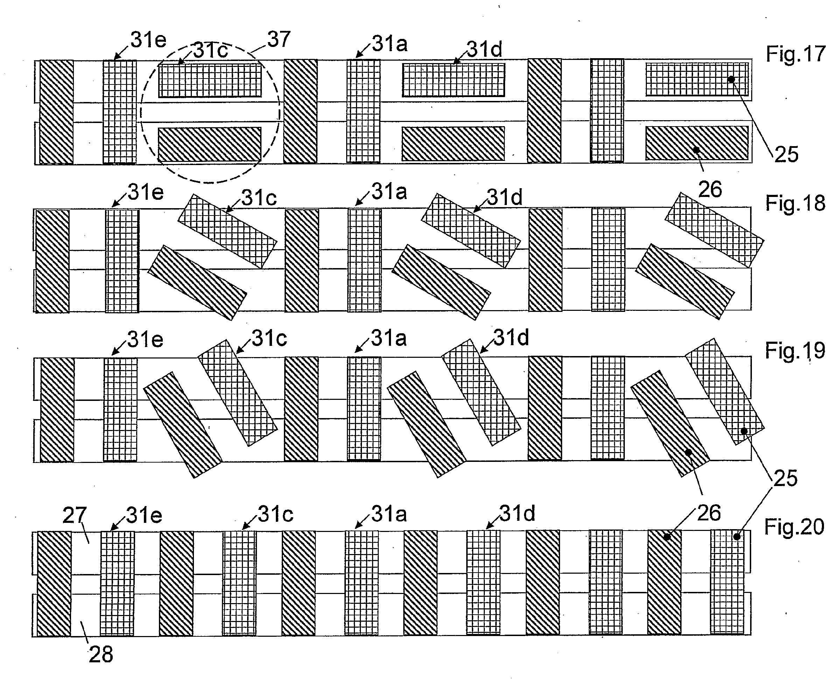

Fig. 13 bis 20 zeigen beispielhaft den Ablauf einer Aktivierung der beschriebenen Wirbelstrombremse 23. Ausgehend von der in Fig. 13 gezeigten inaktiven Stellung entsprechend Fig. 4 werden zunächst die erste, dritte und fünfte Magnetpoleinheit 31 gedreht, bis über die in Fig. 14 und 15 gezeigten Zwischenstellungen die volle aktive Stellung nach Fig. 16 erreicht ist. Falls diese etwa der Hälfte der installierten Bremskraft entsprechende Stellung für das gewünschte Maß der Abbremsung ausreicht, bleibt die aus Fig. 16 ersichtliche Stellung erhalten. Ist dagegen eine Vollbremsung erwünscht, dann werden jetzt, ausgehend von der auch in Fig. 17 gezeigten Stellung nach Fig. 16, auch die zweite, vierte und sechste Magnetpoleinheit 31 über aus Fig. 18 und 19 ersichtliche Zwischenstellungen in die aktive Stellung nach Fig. 20 gedreht, in welcher die Wirbel strombremse 23 voll wirksam ist.

Durch die aus Fig. 13 bis 20 ersichtliche, nacheinander erfolgenden Drehung der Magnetpoleinheiten 31 wird u.a. der Vorteil erzielt, daß diese in ihrer inaktiven Stellung sehr dicht hintereinander angeordnet werden können. Wie durch Hüllkreise 36 und 37 in Fig. 13 und 17 angedeutet ist, ist die Anordnung für jede Magnetpoleinheit (z.B. 31a, 31c) so gewählt, daß diese bei ihrer Drehung gerade nicht mit benachbarten Magnetpoleinheiten (z.B. 31c, 31d bzw. 31e, 31a) kollidieren können, wenn diese benachbarten Magnetpoleinheiten ortsfest gehalten werden. Durch die Hüllkreise 36, 37 ist die dichtest mögliche Lage der Magnetpoleinheiten 31 in ihrer inaktiven Stellung vorgegeben und damit ein kleinerer Abstand in x-Richtung möglich, als wenn alle Magnetpoleinheiten 31 gleichzeitig gedreht werden müßten.

Abgesehen von Fig. 13 bis 20 ist es natürlich auch möglich, nacheinander jeweils nur Gruppen von je zwei Magnetpoleinheiten 31 oder nacheinander einzelne ausgewählte der sechs vorhandenen Magnetpoleinheiten 31 in die aktive Stellung zu drehen.

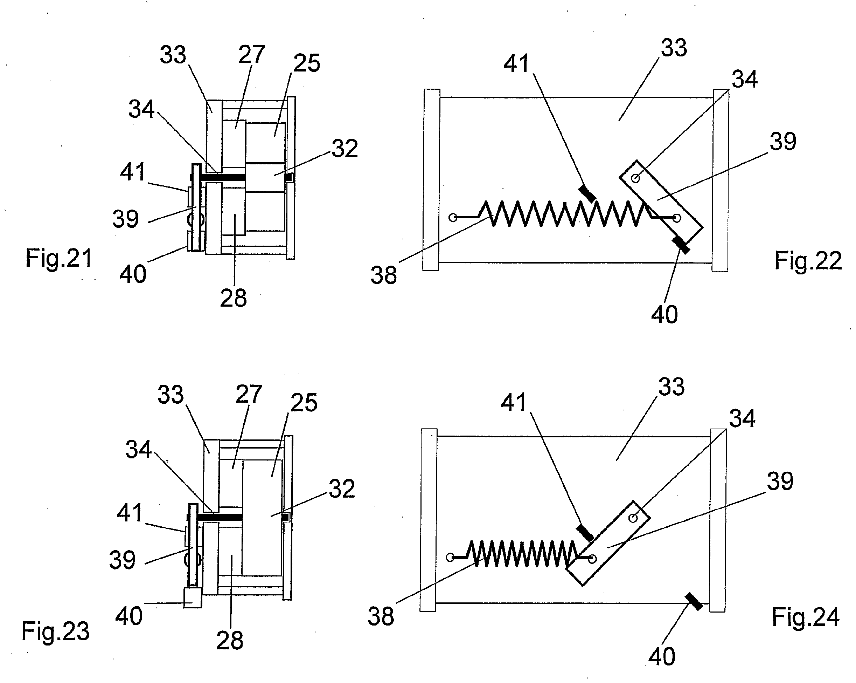

Soll die Drehung der Magnetpoleinheiten 31 mit einem noch geringeren Anteil an elektrischer Energie erfolgen, wie z.B. bei Anwendung von Elektromotoren erforderlich wäre, wird erfindungsgemäß weiter vorgeschlagen, die Drehungen mit Hilfe von vorgespannten Federn 38 (Fig. 21 bis 24) vorzunehmen. Dadurch muß im Bremsfall nur die zur Freigabe der Federkraft erforderliche Energie aufgewendet werden.

Gemäß Fig. 21, die eine Magnetpoleinheit 31 gemäß Fig. 11 zeigt, ist mit der Achse 34 ein radial von dieser abstehender Schwenkhebel 39 fest verbunden, der z.B. an der Außenseite eines rückwärtigen Teils des Gehäuses 33 angeordnet ist. Ein Ende der Feder 38 ist in einem gewissen Abstand von der Achse 34 mit dem Schwenkhebel 39, ein anderes Ende der Feder 38 dagegen mit dem Gehäuse 33 fest verbunden. Außerdem ist die Anordnung so getroffen, daß in der inaktiven Stellung der Magnetpoleinheit 31 (Fig. 21, 22) einerseits die Feder 38 vorgespannt ist, andererseits ein beweglich im oder am Gehäuse 33 gelagerter Sperrstift 40 hinter den Schwenkhebel 39 greift und dessen Verschwenkung verhindert. Soll dagegen die aktive Stellung der Magnetpoleinheit 31 hergestellt werden (Fig. 23, 24), dann wird der Sperrstift 40 mit nicht dargestellten Mitteln in eine aus Fig. 24 ersichtliche Position zurückgezogen. Dadurch wird der Schwenkhebel 39 frei gegeben und durch die Kraft der Feder 38 verschwenkt. Zusammen mit dem Schwenkhebel 39 wird auch die Achse 34 gedreht, was entsprechend der obigen Beschreibung zu einer Verschwenkung der Magnetpoleinheit 31 in die aktive Stellung führt. Vorzugsweise wird die aktive Stellung durch einen Anschlag 41 festgelegt, der den Schwenkweg des Schwenkhebels 39 begrenzt. Die Anordnung ist insbesondere so gewählt, daß beim Anliegen des Schwenkhebels 39 am Anschlag 41 die zugehörige Magnetpoleinheit 31 automatisch die richtige, z.B. aus Fig. 5 und 23 ersichtliche Lage relativ zur Reaktionsschiene 8 bzw. zum betreffenden Magnetrücken 27, 28 einnimmt, d.h. insbesondere die wirksamen Magnetpolflächen mit dem erforderlichen Abstand der Reaktionsschiene 8 parallel gegenüber stehen.

Der Sperrstift 40 und die ihn entriegelnden Mittel bilden einen Verriegelungsmechanismus, der die Permanentmagnete 25, 26 normalerweise in ihrer durch die Federn 38 vorgespannten Stellung verriegelt. Die im Bremsfall erforderliche Entriegelung durch Zurückziehen des Sperrstifts 40 kann z.B. mit elektrischen, elektromagnetischen, pneumatischen, hydraulischen oder mechanischen Mitteln, die notfalls auch manuell betätigt werden könnten, herbeigeführt werden.

Die Erfindung ist nicht auf das beschriebene Ausführungsbeispiel beschränkt, das auf vielfache Weise abgewandelt werden kann. Das gilt insbesondere für die Zahl und die Ausbildung der Permanentmagnete, die im Einzelfall pro Wirbelstrombremse 23 vorgesehen werden. Weiter können andere als die beschriebenen Aktivierungsmittel vorgesehen werden. Insbesondere ist es möglich, die Permanentmagnete 25, 26 durch eine lineare, z.B. in z-Richtung erfolgende Bewegung in den Wirkungsbereich der Reaktionsschiene 8 bzw. in den Spalt zwischen dieser und den Magnetrücken 27, 28 zu bewegen. In diesem Fall könnte eine in zwei Stufen erfolgende Bremsung dadurch ermöglicht werden, daß in einem ersten Schritt eine erste Reihe von Permanentmagneten und in einem zweiten Schritt auch eine zweite Reihe von Permanentmagneten in den Wirkungsbereich der Reaktionsschiene gebracht wird. Weiter braucht im Prinzip jede Magnetpoleinheit 31 nur je einen Permanentmagneten aufweisen, der in Fig. 5 z.B. nur dem oberen oder unteren Magnetrücken 27, 28 zugeordnet ist. Zur Herbeiführung einer hohen maximalen Bremskraft ist jedoch eine Anordnung entsprechend Fig. 4 und 5 zweckmäßig, die wenigstens zwei quer zur Fahrtrichtung, d.h. in z-Richtung übereinander liegende Reihen von Magnetpolen mit alternierenden Polaritäten aufweist. Abgesehen davon könnten den Wirbelstrombremsen 23 andere Reaktionsschienen 8 als die zugeordnet werden, die auch für die Führfunktion benutzt werden, wobei diese anderen Reaktionsschienen auch parallel zu xy-Ebenen liegende Wirkungsflächen aufweisen könnten. Die Wirbelstrombremsen 23 würden in diesem Fall in einer entsprechend gedrehten Lage montiert. Weiter ist klar, daß der aus Fig. 21 bis 24 ersichtiche Verriegelungsmechanismus durch zahlreiche andere zweckmäßige Verriegelungsmechanismen ersetzt werden könnte und nicht dargestellte Mittel vorgesehen sind, um die Magnetpoleinheiten 31 nach einem Bremsvorgang unter Spannung der Federn 38 wieder in die aus Fig. 22 ersichtliche, inaktive Lage zu bringen. Ferner ist es abweichend von Fig. 10 möglich, jede Magnetpoleinheit 31 in einem separaten Gehäuse 33 anzuordnen, wie in Fig. 22 und 24 angedeutet ist. Weiter ist darauf hinzuweisen, daß die Erfindung auch ein mit dem beschriebenen Fahrzeug 1 ausgerüstetes, spurgebundenes Verkehrssystem umfaßt, das aus einer Kombination wenigstens einer, am Fahrzeug 1 angebrachten Wirbelstrombremse 23 und wenigstens einer am Fahrweg 2 angebrachten Reaktionsschiene 8 derart besteht, daß die Wirbelstrombremse 23 in einem inaktiven Zustand außerhalb der Wirkungsbereichs und in einem aktiven Zustand innerhalb des Wirkungsbereichs einer zugeordneten Reaktionsschiene 8 angeordnet ist. Im Fall eines üblichen Rad/Schienesystems könnten die Wirbelstrombremsen z.B. unterhalb der Fahrzeuge montiert und im Bremsfall derart in eine aktive Lage gebracht werden, daß sie mit den jetzt auch als Reaktionsschienen wirkenden Fahrschienen zusammenwirken. Schließlich versteht sich, daß die verschiedenen Merkmale auch in anderen als den beschriebenen dargestellten Kombinationen angewendet werden können.

## Patentansprüche

1. Fahrzeug für ein spurgebundenes Verkehrssystem mit einer Wirbelstrombremse (23), die eine Mehrzahl von Magnetpolen und Mittel zum Aktivieren der Magnetpole in einem Bremsfall enthält, wobei die Magnetpole durch drehbar gelagerte Permanentmagnete (25, 26) gebildet und die Aktivierungsmittel zur Drehung der Permanentmagnete (25, 26) aus einer inaktiven Stellung in eine aktive Stellung eingerichtet sind, **dadurch gekennzeichnet, dass** die Wirbelstrombremse (23) wenigstens zwei Permanentmagnete (25, 26) mit in einer gemeinsamen Ebene liegenden, unterschiedliche Polaritäten aufweisenden Polflächen enthält, die zur Schließung von magnetischen Kreisen bestimmten Magnetbrücken (27,28) zugeordnet sind und die in der aktiven Stellung in einer Fahrtrichtung hintereinander und in der inaktiven Stellung quer zur Fahrtrichtung übereinander angeordnet sind.

2. Fahrzeug nach Anspruch 1, **dadurch gekennzeichnet, dass** die Permanentmagnete (25, 26) zu Magnetpoleinheiten (31) zusammengefasst sind, die je zwei parallel angeordnete Permanentmagnete (25, 26) aufweisen, die durch ein zwischen ihnen angeordnetes Verbindungsteil (32) fest miteinander verbunden sind, und dass die Magnetpoleinheiten (31) mittels an den Verbindungsteilen (32) befestigten Achsen (34) drehbar gelagert sind.

3. Fahrzeug nach Anspruch 2, **dadurch gekennzeichnet, dass** die Wirbelstrombremse (23) eine Mehrzahl von in der Fahrtrichtung hintereinander angeordneten Magnetpoleinheiten (31) enthält und die Aktivierungsmittel zum wahlweisen Drehen der einzelnen Magnetpoleinheiten (31) eingerichtet sind.

4. Fahrzeug nach Anspruch 3, **dadurch gekennzeichnet, dass** die Aktivierungsmittel zum einzeln oder gruppenweise nacheinander erfolgenden Drehen der Magnetpoleinheiten (31) eingerichtet sind.

5. Fahrzeug nach einem der Ansprüche 1 bis 4, **dadurch gekennzeichnet, dass** die Permanentmagnete (25, 26) oder Magnetpoleinheiten (31) in ihrer inaktiven Stellung unter dem Einfluss wenigstens einer vorgespannten Feder (38) stehen, die im Bremsfall durch das Aktivierungsmittel wirksam gemacht wird, um die Permanentmagnete (25, 26) oder Magnetpoleinheiten (31) in die aktive Stellung zu bewegen.

6. Fahrzeug nach Anspruch 5, **dadurch gekennzeichnet, dass** das Aktivierungsmittel einen Verriegelungsmechanismus aufweist, der die Feder (38) in der inaktiven Stellung der Permanentmagnete (25, 26) oder Magnetpoleinheiten (31) in ihrer vorgespannten Stellung verriegelt und im Bremsfall freigibt.

7. Fahrzeug nach Anspruch 6, **dadurch gekennzeichnet, dass** der Verriegelungsmechanismus einen an die Permanentmagnete (25, 26) oder Magnetpoleinheit (31) anlegbaren Sperrstift (40) enthält.

8. Fahrzeug nach Anspruch 6 oder 7, **dadurch gekennzeichnet, dass** ein mechanisch, elektrisch und/oder elektromagnetisch betätigbarer Verriegelungsmechanismus vorgesehen ist.

9. Fahrzeug nach einem der Ansprüche 5 bis 8, **dadurch gekennzeichnet, dass** den Permanentmagneten (25, 26) oder Magnetpoleinheiten (31) ein die aktive Stellung festlegender Anschlag (41) zugeordnet ist.

10. Fahrzeug nach einem der Ansprüche 1 bis 9, **dadurch gekennzeichnet, dass** die Permanentmagnete (25, 26) oder Magnetpoleinheiten (31) in einem gemeinsamen Gehäuse (33) angeordnet sind.

11. Fahrzeug nach einem der Ansprüche 1 bis 10, **dadurch gekennzeichnet, dass** den Permanentmagneten (25, 26) oder Magnetpoleinheiten (31) zwei parallel zur Fahrtrichtung angeordnete, zum Schließen magnetischer Kreise bestimmte Magnetrücken (27, 28) zugeordnet sind.

12. Spurgebundenes Verkehrssystem, insbesondere Magnetschwebebahn, mit einem wenigstens eine Reaktionsschiene (8) aufweisenden Fahrweg (2) und einem auf diesem parallel zur Reaktionsschiene (8) fahrbar angeordneten, eine Wirbelstrombremse (23) aufweisenden Fahrzeug (1), wobei das Fahrzeug nach wenigstens einem der Ansprüche 1 bis 11 ausgebildet ist.

## Claims

1. A vehicle for a tracked transport system with an eddy current brake (23), which contains a multiplicity of magnetic poles and means for activation of the magnetic poles in the event of braking, wherein
the magnetic poles are formed by permanent magnets (25, 26) mounted such that they can rotate, and the means of activation are fitted so as to rotate the permanent magnets (25, 26) from an inactive position to an active position,
**characterised in that**,
the eddy current brake (23) contains at least two permanent magnets (25, 26) with pole surfaces located in a common plane and having different polarities, which are assigned to specific magnetic bridges (27, 28) for purposes of closing magnetic circuits, and which in the active position are arranged one behind another in the direction of travel, and in the inactive position are arranged one above another transverse to the direction of travel.

2. The vehicle in accordance with claim 1,
**characterised in that**,
the permanent magnets (25, 26) are combined into magnetic pole units (31), each of which has two permanent magnets (25, 26) arranged in parallel, which are fixedly connected with one another by a connecting part (32) arranged between them, and
**in that**
the magnetic pole units (31) are mounted such that they can rotate by means of axes (34) fixed to the connecting parts (32).

3. The vehicle in accordance with claim 2,
**characterised in that**,
the eddy current brake (23) includes a multiplicity of magnetic pole units (31) arranged one behind another in the direction of travel, and the means of activation are fitted for the selective rotation of the individual magnetic pole units (31).

4. The vehicle in accordance with claim 3,
**characterised in that**,
the means of activation are fitted for the rotation of the magnetic pole units (31) that takes place either individually, or in groups, one after another.

5. The vehicle in accordance with one of the claims 1 to 4,
**characterised in that**,
in their inactive position the permanent magnets (25, 26) or magnetic pole units (31) are under the influence of at least one pre-loaded spring (38), which in the event of braking is activated by the means of activation so as to move the permanent magnets (25, 26) or magnetic pole units (31) into the active position.

6. The vehicle in accordance with claim 5,
**characterised in that**,
the means of activation has a locking mechanism, which in the inactive position of the permanent magnets (25, 26) or magnetic pole units (31) locks the spring (38) in its pre-loaded position, and releases it in the event of braking.

7. The vehicle in accordance with claim 6,
**characterised in that**,
the locking mechanism contains a locking pin (40), which can be applied to the permanent magnets (25, 26) or magnetic pole unit (31).

8. The vehicle in accordance with claim 6 or 7,
**characterised in that**,
a locking mechanism is provided that can be actuated mechanically, electrically, and/or electromagnetically.

9. The vehicle in accordance with one of the claims 5 to 8,
**characterised in that**,
a stop (41) defining the active position is assigned to the permanent magnets (25, 26) or magnetic pole units (31).

10. The vehicle in accordance with one of the claims 1 to 9,
**characterised in that**,
the permanent magnets (25, 26) or magnetic pole units (31) are arranged in a common housing (33).

11. The vehicle in accordance with one of the claims 1 to 10,
**characterised in that**,
two magnetic bridges (27, 28), arranged parallel to the direction of travel and intended for the closure of magnetic circuits, are assigned to the permanent magnets (25, 26) or magnetic pole units (31).

12. A tracked transport system, in particular a magnetic levitation train, with a track (2) having at least one reaction rail (8), and a vehicle (1) having an eddy current brake (23), arranged such that it can travel on the track (2) parallel to the reaction rail (8), wherein
the eddy current brake (23) contains a multiplicity of magnetic poles interacting with the reaction rail (8), and means for activation of the magnetic poles in the event of braking,
**characterised in that**,
the eddy current brake (23) is designed in accordance with at least one of the claims 1 to 11.

## Revendications

1. Véhicule pour un système de circulation guidé avec un frein à courant de Foucault (23), qui contient une pluralité de pôles magnétiques et de moyens pour activer les pôles magnétiques en cas de freinage, les pôles magnétiques étant formés par des aimants permanents (25,26) logés pouvant tourner et les moyens d'activation étant agencés pour faire tourner dans une position active les aimants permanents (25,26) à partir d'une position inactive, **caractérisé en ce que** le frein à courant de Foucault (23) contient au moins deux aimants permanents (25,26) avec des surfaces polaires situées dans un plan commun, comportant des polarités différentes qui sont attribuées à certains ponts magnétiques (27,28) pour la fermeture des circuits magnétiques et qui sont disposés dans la position active l'une derrière l'autre dans la direction de la marche et l'une sur l'autre dans la position inactive transversalement à la direction de la marche.

2. Véhicule selon la revendication 1, **caractérisé en ce que** les aimants permanents (25,26) sont assemblés en unités de pôles magnétiques (31), qui comportent respectivement deux aimants permanents (25,26) disposés parallèlement, qui sont reliés fixement l'un à l'autre par une pièce de liaison (32) disposée entre eux et **en ce que** les unités de pôles magnétiques (31) sont logées pouvant tourner au moyen d'axes (34) fixés sur les pièces de liaison (32).

3. Véhicule selon la revendication 2, **caractérisé en ce que** le frein à courant de Foucault (23) contient une pluralité d'unités de pôles magnétiques (31) disposées l'une derrière l'autre en direction de la marche et les moyens d'activation sont agencés pour la rotation facultative des unités de pôles magnétiques individuelles (31).

4. Véhicule selon la revendication 3, **caractérisé en ce que** les moyens d'activation sont agencés pour faire tourner successivement les unités de pôles magnétiques (31), individuellement ou en groupe.

5. Véhicule selon l'une quelconque des revendications 1 à 4, **caractérisé en ce que** les aimants permanents (25,26) ou les unités de pôles magnétiques (31) se trouvent dans leur position inactive sous l'effet d'au moins un ressort en précontrainte (38), qui est activé par les moyens d'activation en cas de freinage pour déplacer les aimants permanents (25,26) ou les unités magnétiques (31) dans la position active.

6. Véhicule selon la revendication 5, **caractérisé en ce que** le moyen d'activation comporte un mécanisme de verrouillage, qui verrouille le ressort (38) dans la position active des aimants permanents (25,26) ou des unités de pôles magnétiques (31) dans leur position de précontrainte et débloque en cas de freinage.

7. Véhicule selon la revendication 6, **caractérisé en ce que** le mécanisme de verrouillage contient une goupille de blocage (40) pouvant être posée sur les aimants permanents (25,26) ou l'unité de pôles magnétiques (31) .

8. Véhicule selon la revendication 6 ou 7, **caractérisé en ce qu'**un mécanisme de verrouillage pouvant être actionné mécaniquement, électriquement et/ou électromagnétiquement est prévu.

9. Véhicule selon l'une quelconque des revendications 5 à 8, **caractérisé en ce qu'**une butée (41) déterminant la position active est attribuée aux aimants permanents (25,26) ou aux unités de pôles magnétiques (31).

10. Véhicule selon l'une quelconque des revendications 1 à 9, **caractérisé en ce que** les aimants permanents (25,26) ou unités de pôles magnétiques (31) sont disposés dans un boîtier commun (33).

11. Véhicule selon l'une quelconque des revendications 1 à 10, **caractérisé en ce que** deux arrières magnétiques (27, 28) définis pour fermer les circuits magnétiques, disposés parallèlement à la direction de marche, sont affectés aux aimants permanents (25,26) ou aux unités de pôles magnétiques (31).

12. Système de circulation guidé, notamment voie ferroviaire à sustentation magnétique, avec au moins une voie de circulation (2) comportant un rail de réaction (8) et un véhicule (1) disposé sur celui-ci pouvant circuler parallèlement au rail de réaction (8), comportant un frein à courant de Foucault (23), le frein à courant de Foucault (23) contenant une pluralité de pôles magnétiques coopérant avec le rail de réaction (8) et des moyens pour activer les pôles magnétiques en cas de freinage, **caractérisé en ce que** le frein à courant de Foucault (23) est constitué selon au moins l'une quelconque des revendications 1 à 11.
